# FASCICULE DE BREVET EUROPEEN

(11) **EP 3 429 012 B1**
(45) Date de publication et mention de la délivrance du brevet: **02.10.2019**
(21) Numéro de dépôt: 18182686.8
(22) Date de dépôt: 10.07.2018
(51) Int. Cl.: H01M 8/18, H01M 8/249, H01M 8/1018

(54) **SYSTEME ELECTROCHIMIQUE REVERSIBLE COMPORTANT DEUX DISPOSITIFS DE TYPE PEM EN CONFIGURATION ELECTRODES D'OXYDATION ET DE REDUCTION**
REVERSIBLES ELEKTROCHEMISCHES SYSTEM, DAS ZWEI VORRICHTUNGEN VOM TYP PEM MIT OXYDATIONS- UND REDUKTIONSELEKTRONENKONFIGURATION UMFASST
REVERSIBLE ELECTROCHEMICAL SYSTEM COMPRISING TWO PEM TYPE DEVICES IN OXIDATION AND REDUCTION ELECTRODE CONFIGURATION

(30) Priorité: 12.07.2017 FR 1756604
(43) Date de publication de la demande: 16.01.2019
(73) Titulaire: Commissariat à l'Énergie Atomique et aux Énergies Alternatives, 75015 Paris (FR)
(72) Inventeur: VERDIN, Baptiste, 38400 SAINT MARTIN D'HERES (FR); VINCENT, Rémi, 38000 GRENOBLE (FR)
(74) Mandataire: GIE Innovation Competence Group

(56) Documents cités:
- US-A1- 2002 022 162
- PETTERSSON J ET AL: "A review of the latest developments in electrodes for unitised regenerative polymer electrolyte fuel cells", JOURNAL OF POWER SOURCES, ELSEVIER SA, CH, vol. 157, no. 1, 19 juin 2006 (2006-06-19) , pages 28-34, XP027937764, ISSN: 0378-7753 [extrait le 2006-06-19]

## Description

### DOMAINE TECHNIQUE

Le domaine de l'invention est celui des systèmes électrochimiques réversibles à membrane échangeuse de protons. Un tel système électrochimique est ainsi adapté à fonctionner en mode 'électrolyseur' comme en mode 'pile à combustible'.

### ÉTAT DE LA TECHNIQUE ANTÉRIEURE

Les systèmes électrochimiques dits réversibles à membrane échangeuse de protons sont des systèmes électrochimiques adaptés à fonctionner tant en mode 'électrolyseur' (mode EC, pour *Electrolysis Cell,* en anglais) produisant ainsi de l'hydrogène et de l'oxygène par électrolyse de l'eau, qu'en mode 'pile à combustible' (mode FC, pour *Fuel Cell,* en anglais) produisant de l'énergie électrique et de l'eau par consommation d'hydrogène et d'oxygène. Un tel système électrochimique à membrane échangeuse de protons est habituellement appelé pile à combustible régénérative (RFC, pour *Regenerative Fuel Cell,* en anglais).

Un système électrochimique réversible RFC peut comporter deux dispositifs électrochimiques distincts l'un de l'autre, de type PEM (pour *Proton Exchange Membrane,* en anglais), à savoir une pile à combustible et un électrolyseur. Il peut en variante comporter un même dispositif électrochimique de type PEM adapté à fonctionner alternativement comme électrolyseur et comme pile à combustible. Dans ce dernier cas, le système électrochimique est alors appelé pile à combustible réversible unitaire (URFC, pour *Unitized Regenerative Fuel Cell,* en anglais).

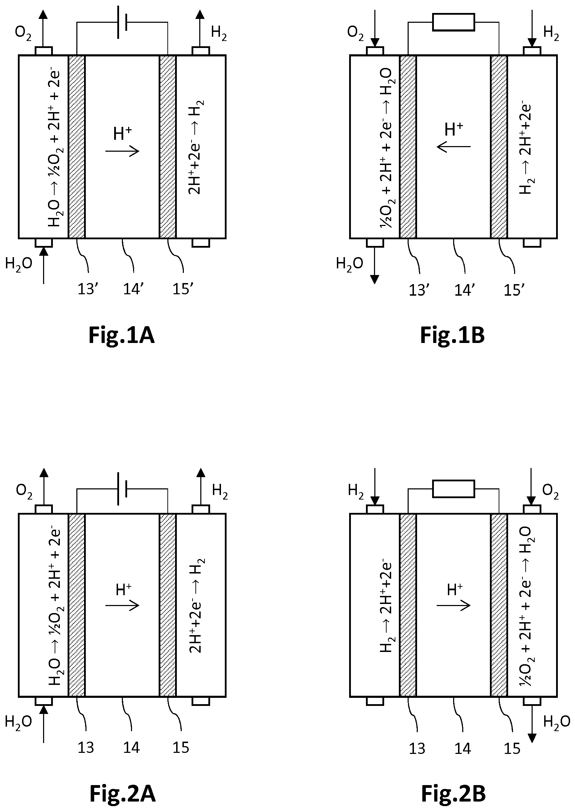

L'article de Grigoriev et al. intituté Design and characterization of bi-functional electrocatalytic layers for application in PEM unitized regenerative fuel cells, Int J Hydrogen Energy 2010, 35, 5070-5076 décrit un exemple de pile à combustible réversible unitaire, dont deux variantes sont illustrées sur les figures 1A-1B et 2A-2B. Elle comporte au moins une cellule électrochimique de type PEM dont l'assemblage membrane électrodes est formé d'une membrane électrolytique 14, 14' échangeuse de protons séparant une première électrode 13, 13' d'une deuxième électrode 15, 15'. Elle peut présenter deux configurations différentes, qui diffèrent l'une de l'autre essentiellement par la gestion des gaz et donc par le type de réactions d'oxydoréduction ayant lieu aux électrodes.

Une première configuration, illustrée sur les figures 1A et 1B, est dite à électrodes d'oxygène et d'hydrogène. Chaque électrode traite alors du même gaz, tant en mode EC (fig.1A) et qu'en mode FC (fig.1B). Ainsi, la première électrode 13' est une anode assurant l'oxydation de l'eau générant de l'oxygène en mode EC, et une cathode assurant la réduction de l'oxygène en mode FC. La deuxième électrode 15' est une cathode assurant la réduction de protons en mode EC, et une anode assurant l'oxydation de l'hydrogène en mode FC. Un inconvénient de cette configuration est notamment que l'électrode d'oxygène, ici la première électrode 13', peut présenter des performances électrochimiques diminuées du fait, d'une part, de risques de dégradation du support carboné lors de la réaction d'oxydation de l'eau en mode EC, et d'autre part, de la présence d'un catalyseur moins performant pour assurer la réaction de réduction de l'oxygène en mode FC.

La deuxième configuration, illustrée sur les figures 2A et 2B, est dite à électrodes de réduction et d'oxydation. Ici, chaque électrode présente le même type de réaction d'oxydoréduction en mode EC (fig.2A) et en mode FC (fig.2B). Ainsi, la première électrode 13 est une anode assurant l'oxydation de l'eau générant de l'oxygène en mode EC, et l'oxydation de l'hydrogène en mode FC. La deuxième électrode 15 est une cathode assurant la réduction de protons en mode EC et la réduction de l'oxygène en mode FC. Le fonctionnement de ce système électrochimique réversible dans cette configuration nécessite alors d'inverser les fluides entre les modes EC et FC, et prévoit en particulier une étape intermédiaire de purge de l'eau liquide et de séchage des électrodes.

### EXPOSÉ DE L'INVENTION

L'invention a pour objectif de remédier au moins en partie aux inconvénients de l'art antérieur, et plus particulièrement de proposer un système électrochimique réversible qui permette d'obtenir des performances électrochimiques améliorées.

Pour cela, l'objet de l'invention est un système électrochimique réversible ayant des premiers ports anodique et cathodique et des deuxièmes ports anodique et cathodique opposés, destiné à fonctionner alternativement : en mode électrolyseur dans lequel il est adapté à recevoir de l'eau à électrolyser au premier port anodique et à fournir de l'oxygène au deuxième port anodique et de l'hydrogène au deuxième port cathodique ; et en mode pile à combustible, dans lequel il est adapté à recevoir de l'hydrogène au deuxième port anodique et de l'oxygène au deuxième port cathodique et à fournir de l'eau au premier port cathodique.

Il comporte un dispositif électrochimique primaire comprenant un assemblage membrane électrodes, comportant une anode primaire et une cathode primaire séparée par une membrane primaire échangeuse de protons : l'anode primaire, reliée au premier port anodique et au deuxième port anodique, étant adaptée à réaliser une oxydation de l'eau provenant du premier port anodique et une oxydation de l'hydrogène provenant du deuxième port anodique ; et la cathode primaire, reliée au premier port cathodique et au deuxième port cathodique, étant adaptée à réaliser une rédaction de protons, et une réduction d'oxygène provenant du deuxième port cathodique.

Selon l'invention, le système électrochimique réversible comporte un dispositif électrochimique secondaire comprenant un assemblage membrane électrodes, comportant une anode secondaire et une cathode secondaire séparée par une membrane secondaire échangeuse de protons : l'anode secondaire étant reliée à l'anode primaire et au deuxième port anodique, et étant adaptée à réaliser une oxydation d'hydrogène provenant de l'anode primaire et une oxydation de l'hydrogène provenant du deuxième port anodique ; et la cathode secondaire étant reliée à la cathode primaire et au deuxième port cathodique, et étant adaptée à réaliser une rédaction de protons et une réduction de l'oxygène provenant du deuxième port cathodique.

Certains aspects préférés mais non limitatifs de ce système électrochimique réversible sont les suivants.

La membrane électrolytique primaire peut présenter une épaisseur moyenne inférieure ou égale à 100µm.

La membrane électrolytique primaire peut présenter une épaisseur moyenne inférieure à celle de la membrane électrolytique secondaire.

La membrane électrolytique secondaire peut présenter une épaisseur moyenne supérieure à 100µm.

Le système électrochimique réversible peut comporter une source électrique dite primaire adaptée à appliquer en mode électrolyseur un premier signal électrique entre les anode et cathode primaires, et une source électrique dite secondaire adaptée à appliquer en mode électrolyseur un deuxième signal électrique entre les anode et cathode secondaires, le deuxième signal électrique étant de même signe que le premier signal électrique et d'une intensité inférieure.

Le système électrochimique réversible peut comporter au moins un circuit anodique de circulation fluidique reliant le premier port anodique au deuxième port anodique en passant par les anodes primaire secondaire, et au moins un circuit cathodique de circulation fluidique reliant le premier port cathodique au deuxième port cathodique en passant par les cathodiques primaire et secondaire.

L'invention porte également sur un procédé de fonctionnement du système électrochimique réversible selon l'une quelconque des caractéristiques précédentes, comportant une alternance entre :
- au moins une étape en mode électrolyseur dans lequel de l'eau est introduite au premier port anodique en sur-stoechiométrie vis-à-vis du dispositif primaire ;
- au moins une étape en mode pile à combustible dans lequel de l'hydrogène et de l'oxygène sont introduits respectivement aux deuxièmes ports anodique et cathodique en sur-stoechiométrie au moins vis-à-vis du dispositif secondaire.

Le procédé peut comporter, entre une étape en mode électrolyseur et une étape en mode pile à combustible, une étape intermédiaire de purge de l'eau liquide présente dans le système électrochimique réversible par injection d'azote.

Le procédé peut comporter une étape d'obtention d'azote par injection d'air au deuxième port cathodique, le système électrochimique réversible fonctionnant en mode pile à combustible en boucle fermée.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
les figures 1A et 1B, déjà décrites, illustrent de manière schématique une pile à combustible réversible unitaire en configuration dite électrodes d'oxygène et d'hydrogène, selon un exemple de l'art antérieur, en mode électrolyseur (fig.1A) et en mode pile à combustible (fig.1B) ;
les figures 2A et 2B, déjà décrites, illustrent de manière schématique une pile à combustible réversible unitaire en configuration dite électrodes d'oxydation et de réduction, selon un autre exemple de l'art antérieur, en mode électrolyseur (fig.2A) et en mode pile à combustible (fig.2B) ;
la figure 3 est une vue schématique d'un système électrochimique réversible selon un mode de réalisation ;
les figures 4A et 4B sont des vues schématiques du système électrochimique illustré sur la fig.3 fonctionnant en mode électrolyseur (fig.4A) et en mode pile à combustible (fig.4B).

### EXPOSÉ DÉTAILLÉ DE MODES DE RÉALISATION PARTICULIERS

Sur les figures et dans la suite de la description, les mêmes références représentent les éléments identiques ou similaires. Les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. L'expression du type « comportant un » doit être comprise comme « comportant au moins un », sauf indication contraire.

L'invention porte sur un système électrochimique réversible adapté à fonctionner alternativement en mode électrolyseur (mode EC) et en mode pile à combustible (mode FC). Il comporte des premiers ports d'entrée/ sortie fluidique dits anodique et cathodique, reliés respectivement à des deuxièmes ports d'entrée/ sortie fluidique dits anodique et cathodique. En mode EC, le système réversible est adapté à réaliser l'électrolyse de l'eau reçue au premier port anodique pour fournir de l'oxygène au deuxième port anodique et de l'hydrogène au deuxième port cathodique. En mode FC, il est adapté à recevoir de l'hydrogène au deuxième port anodique et de l'oxygène au deuxième port cathodique pour fournir de l'électricité et de l'eau au premier port cathodique.

Pour cela, le système réversible comporte au moins deux dispositifs électrochimiques, dits primaire et secondaire, disposés fluidiquement en série l'un avec l'autre entre les premiers ports et les deuxièmes ports. Le dispositif primaire est une pile à combustible réversible unitaire (URFC) en configuration à électrodes de réduction et d'oxydation. Le dispositif secondaire est adapté, en mode EC, à séparer l'hydrogène contenu dans l'oxygène issu de l'anode du dispositif primaire, et, en mode FC, à fonctionner comme pile à combustible. Il présente également une configuration à électrodes d'oxydation et de réduction.

Chacun des dispositifs primaire et secondaire comporte une ou plusieurs cellules électrochimiques comprenant chacune un assemblage membrane électrodes (AME) dont la membrane électrolytique est du type échangeuse de protons. Chaque membrane électrolytique est interposée entre une électrode d'oxydation, c'est-à-dire une anode, et une électrode de réduction, c'est-à-dire une cathode. Le ou les AME du dispositif primaire sont disposés en série avec celui ou ceux du dispositif secondaire, entre les premiers ports et les deuxièmes ports. Ainsi, le premier port anodique et le deuxième port anodique sont reliés fluidiquement l'un à l'autre par l'anode primaire et l'anode secondaire, de sorte qu'un fluide circulant entre le premier port anodique et le deuxième port anodique vient au contact de l'anode primaire et de l'anode secondaire. De manière identique, le premier port cathodique et le deuxième port cathodique sont reliés fluidiquement l'un à l'autre par la cathode primaire et la cathode secondaire, de sorte qu'un fluide circulant entre le premier port cathodique et le deuxième port cathodique vient au contact de la cathode primaire et de la cathode secondaire.

Les dispositifs primaire et secondaire présentent ainsi une configuration dite d'électrodes d'oxydation et de réduction et non pas dans une configuration dite d'électrodes d'hydrogène et d'oxygène. En d'autres termes, chaque électrode des AME est le lieu d'une réaction d'oxydoréduction du même type en mode EC comme en mode FC. Plus précisément, les électrodes d'oxydation, à savoir les anodes, sont le lieu d'une réaction d'oxydation d'hydrogène (dite HOR, pour *Hydrogen Oxidation Reaction*) ou d'une réaction d'oxydation de l'eau (dite OER, pour *Oxygen Evolution Reaction*)*.* Les électrodes de réduction, à savoir les cathodes, sont le lieu d'une réaction de réductions de protons (dite HER, pour *Hydrogen Evolution Reaction*) ou d'une réaction de réduction d'oxygène (dite ORR, pour *Oxygen Reduction Reaction*)*.*

Ainsi, un tel système électrochimique réversible permet d'obtenir des performances électrochimiques améliorées par rapport aux exemples d'URFC de l'art antérieur mentionnés précédemment, dans la mesure où la présence du dispositif secondaire autorise l'amincissement de la membrane électrolytique primaire. En effet, la réduction de l'épaisseur moyenne de la membrane primaire permet de diminuer la résistance ohmique protonique et donc d'améliorer les performances électrochimiques du dispositif primaire, en particulier en mode EC, mais également en mode FC. En mode EC, la consommation électrique du dispositif secondaire reste faible, de sorte que le système réversible présente ainsi des performances électrochimiques améliorées.

L'amincissement de la membrane primaire peut conduire, en mode EC, à ce que de l'hydrogène généré à la cathode primaire diffuse jusqu'à l'anode primaire et se mélange à l'oxygène généré. Le dispositif secondaire fonctionne alors comme un séparateur assurant l'oxydation sélective de l'hydrogène présent, ce qui réduit les risques d'ignition. Ainsi, les performances électrochimiques sont améliorées tout en préservant la sécurité vis-à-vis des risques d'ignition.

La membrane électrolytique du dispositif primaire peut ainsi être amincie, de sorte qu'elle présente une épaisseur moyenne inférieure ou égale à 100µm, de préférence inférieure ou égale à 80µm, voire à 70µm, et de préférence égale à 50µm environ. L'épaisseur moyenne est ici la moyenne de l'épaisseur locale de la membrane pour une force de serrage donnée, par exemple nulle.

L'épaisseur moyenne de la membrane primaire peut alors être inférieure à celle de la membrane électrolytique du dispositif secondaire dont les performances sont moins sensibles. La membrane électrolytique secondaire peut ainsi présenter une épaisseur moyenne supérieure à 100µm, par exemple égale à 150µm environ ou à 180µm environ. Les membranes électrolytiques primaire et secondaire présentent avantageusement les mêmes propriétés physiques mais peuvent alors différer l'une de l'autre essentiellement par la valeur de leur épaisseur moyenne, à force de serrage identique.

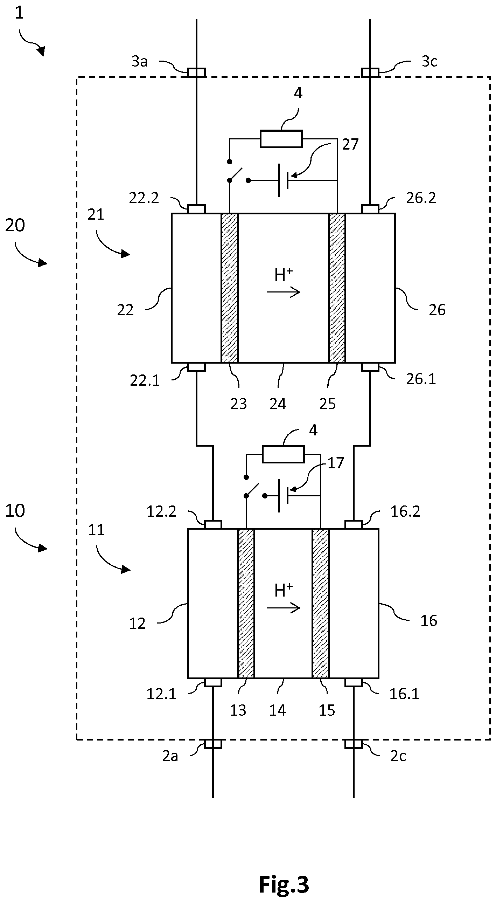

La figure 3 illustre schématiquement un système électrochimique réversible 1 selon un mode de réalisation. Comme mentionné précédemment, le système électrochimique réversible 1 est adapté à fonctionner alternativement en mode électrolyseur (mode EC) et en mode pile à combustible (mode FC). Il est ainsi adapté, en mode EC, à recevoir de l'eau au premier port anodique 2a pour fournir de l'oxygène au deuxième port anodique 3a en plus de l'eau excédentaire et de l'hydrogène au deuxième port cathodique 3c en plus de l'eau électro-osmosée au travers de la membrane, et, en mode FC, à recevoir de l'hydrogène au deuxième port anodique 3a et de l'oxygène au deuxième port cathodique 3c pour fournir de l'eau au premier port cathodique 2c en plus de l'oxygène en excès ainsi que de l'énergie électrique. Le système réversible 1 comporte un dispositif électrochimique primaire 10 formant une pile URFC en configuration à électrodes d'oxydation et de réduction, et un dispositif électrochimique secondaire 20 formant un séparateur de l'hydrogène présent dans l'oxygène généré par le dispositif primaire 10 en mode EC, et une pile à combustible en mode FC. Il est également en configuration à électrodes d'oxydation et de réduction.

Le dispositif électrochimique primaire 10 est une pile à combustible réversible unitaire (URFC). Il est ainsi adapté, en mode EC, à fonctionner comme électrolyseur à partir de l'eau reçue au premier port anodique 2a, et, en mode FC, à fonctionner comme pile à combustible à partir d'hydrogène et d'oxygène transmis par le dispositif secondaire 20 à partir respectivement des deuxièmes ports anodique 3a et cathodique 3c.

Il comporte pour cela au moins une cellule électrochimique 11 dite primaire dont l'assemblage membrane électrodes est formé d'une anode primaire 13 et d'une cathode primaire 15 séparées l'une de l'autre par une membrane électrolytique 14 échangeuse de protons. Elle comporte en outre des circuits anodique 12 et cathodique 16 de distribution fluidique, adaptés à faire circuler un fluide respectivement le long et au contact de l'anode primaire 13 et de la cathode primaire 15. Par ailleurs, l'AME peut être connecté électriquement à une source électrique 17 en mode EC, par exemple une source de courant, et à une charge électrique 4 en mode FC.

L'anode primaire 13 comporte une couche active adaptée à réaliser une réaction d'oxydation de l'eau (OER) en mode EC, ainsi qu'une réaction d'oxydation de l'hydrogène (HOR) en mode FC. Elle comporte ainsi au moins un catalyseur, et de préférence plusieurs catalyseurs distincts favorisant ces deux réactions d'oxydation, par exemple de l'oxyde d'iridium favorisant la réaction d'oxydation de l'eau, et du platine favorisant la réaction d'oxydation de l'hydrogène. A titre illustratif, la couche active peut comporter, sur un support ici non carboné, 2 mg/cm² d'oxyde d'iridium et entre 0,2 et 0,5 mg/cm² de noir de platine. La réaction d'oxydation de l'eau (OER) s'écrit : 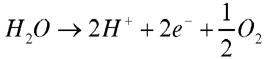 Et la réaction d'oxydation de l'hydrogène (HOR) s'écrit :

*H*₂ → 2*H*⁺ + 2*e*⁻

La cathode primaire 15 comporte une couche active adaptée à réaliser une réaction de réduction des protons (HER) en mode EC, ainsi qu'une réaction de réduction de l'oxygène (ORR) en mode FC. Elle comporte ainsi au moins un catalyseur favorisant ces deux réactions de réduction, par exemple du platine favorisant la réduction des protons tout comme celle de l'oxygène. A titre illustratif, la couche active peut comporter du platine sur support carboné avec un chargement compris entre 0,5 et 1 mg/cm² environ. La réaction de réduction des protons (HER) s'écrit :

2*H*⁺ + 2*e*⁻ → *H*₂

Et la réaction de réduction de l'oxygène (ORR) s'écrit :

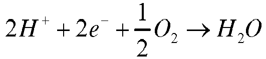

La membrane électrolytique primaire 14 est du type échangeuse de protons. Elle permet la diffusion des protons de l'anode primaire 13 jusqu'à la cathode primaire 15, les protons pouvant se présenter au sein de la membrane primaire 14 sous la forme des ions H₃O⁺. Elle présente un coefficient non nul de perméation de l'hydrogène, ce qui autorise ainsi la diffusion de l'hydrogène au travers de la membrane primaire 14, de la cathode primaire 15 jusqu'à l'anode primaire 13. La membrane primaire 14 peut être réalisée à partir de matériaux choisis habituellement par l'homme du métier, tels que ceux commercialisés sous la référence Nafion N212 ou Nafion NE1035 qui présente un coefficient de perméation à l'hydrogène de l'ordre de 1,25.10⁴ cm³/s/cm² à 80°C et à pression atmosphérique, voire ceux commercialisés sous la référence Nafion N1135. A partir de ces membranes de référénce, la membrane primaire 14 est avantageusement amincie, de sorte qu'elle présente une épaisseur moyenne, à force de serrage nulle, inférieure ou égale à 100µm, de préférence inférieure ou égale à 80µm, voire à 70µm, par exemple égale à 50µm environ telle que la référence N212. Une telle épaisseur moyenne de membrane permet ainsi de réduire sa résistance ohmique, ce qui améliore les performances électrochimiques du dispositif primaire 10 en mode EC, mais également en mode FC. Cela peut alors se traduire, en mode EC, par une diffusion plus importante de l'hydrogène généré à la cathode primaire 15 par perméation au travers de la membrane primaire 14 jusqu'à l'anode primaire 13, l'hydrogène se mélangeant alors dans l'oxygène généré. Cet hydrogène sera ensuite oxydé par le dispositif secondaire 20.

Une source électrique 17, par exemple une source de courant 17 est destinée à être connectée électriquement aux électrodes 13, 15 de la cellule électrochimique primaire 11 lors du mode EC. Elle génère alors une différence de potentiel électrique continue V1 entre l'anode primaire 13 et la cathode primaire 15. La tension électrique V1 est positive, dans le sens où le potentiel électrique imposé à l'anode primaire 13 est supérieur à celui imposé à la cathode primaire 15. Elle peut être comprise entre 1,3V et 3V, par exemple égale à 1,8V environ, pour une densité de courant comprise entre 50mA/cm² et 4A/cm² environ. La tension V1 résultante de l'application du courant Il lors du mode EC permet ainsi d'assurer l'oxydation de l'eau (OER) à l'anode primaire 13, la circulation des électrons dans le circuit électrique jusqu'à la cathode primaire 15, et la réduction des protons (HOR) à la cathode primaire 15. La source électrique 17 peut alternativement être une source de tension électrique.

Une charge électrique 4 est destinée à être connectée électriquement à la cellule électrochimique primaire 11 lors du mode FC. Elle est adaptée à recevoir le courant électrique généré à l'anode primaire 13 par la réaction d'oxydation de l'hydrogène (HOR). Ainsi, une différence de potentiel électrique est appliquée aux bornes de la charge électrique 4, où le potentiel appliqué par la cathode primaire 15 est supérieur à celui appliqué par l'anode primaire 13. La tension appliquée par la cellule électrochimique primaire 11 à la charge électrique 4 peut être de l'ordre de 0,7V. Le signe de la tension électrique est opposé à celui de la tension électrique V1, mais le sens du courant électrique n'est pas inversé.

La cellule électrochimique primaire 11 comporte des circuits anodique 12 et cathodique 16 de distribution fluidique, qui assurent l'écoulement de fluide le long et au contact des anode 13 et cathode 15 primaires, respectivement. Ainsi, le circuit de distribution anodique 12 assure l'écoulement fluidique entre un premier collecteur anodique 12.1 et un deuxième collecteur anodique 12.2 opposé au premier. Le premier collecteur anodique 12.1 est relié au premier port anodique 2a, et le deuxième collecteur anodique est relié à un circuit anodique 22 de distribution fluidique du dispositif secondaire 20. De même, le circuit de distribution cathodique 16 assure l'écoulement fluidique entre un premier collecteur cathodique 16.1 et un deuxième collecteur cathodique 16.2 opposé au premier. Le premier collecteur cathodique 16.1 est relié au premier port cathodique 2c, et le deuxième collecteur cathodique 16.2 est relié à un circuit cathodique 26 de distribution fluidique du dispositif secondaire 20.

Le dispositif électrochimique secondaire 20 est adapté, en mode EC, à former un dispositif de séparation de l'hydrogène présent dans l'oxygène provenant de l'anode 13 du dispositif primaire 10, et, en mode FC, à former une pile à combustible à partir de l'hydrogène et de l'oxygène reçus respectivement aux deuxièmes ports anodique 3a et cathodique 3c. Comme le dispositif primaire 10, il présente une configuration à électrodes d'oxydation et de réduction.

Il comporte pour cela au moins une cellule électrochimique dite secondaire 21 dont l'assemblage membrane électrodes est formé d'une anode secondaire 23 et d'une cathode secondaire 25 séparées l'une de l'autre par une membrane électrolytique 24 échangeuse de protons. Elle comporte en outre des circuits anodique 22 et cathodique 26 de distribution fluidique, adaptés à faire circuler un fluide respectivement le long et au contact de l'anode secondaire 23 et de la cathode secondaire 25. Par ailleurs, l'AME peut être connecté électriquement à une source électrique 27 en mode EC, par exemple une source de courant, et à une charge électrique 4 en mode FC. La charge électrique peut être celle destinée à être connectée au dispositif primaire 10 ou être distincte de cette dernière.

L'anode secondaire 23 comporte une couche active adaptée à réaliser une réaction d'oxydation de l'hydrogène (HOR), que ce soit en mode EC qu'en mode FC. Elle comporte ainsi au moins un catalyseur favorisant cette réaction d'oxydation, de préférence des particules de platine supportées par du carbone, voire du palladium.

La cathode secondaire 25 comporte une couche active adaptée à réaliser une réaction de réduction de protons (HER) en mode EC, ainsi qu'une réaction de réduction de l'oxygène (ORR) en mode FC. Elle comporte ainsi un ou plusieurs catalyseurs favorisant ces réactions de réduction, par exemple du platine favorisant la réduction des protons comme la réduction de l'oxygène. A titre illustratif, la couche active peut comporter des particules de platine supportées par du carbone avec un chargement compris entre 0,5 et 1 mg/cm² environ, voire du palladium.

La membrane électrolytique secondaire 24 est du type échangeuse de protons. Elle permet la diffusion des protons de l'anode secondaire 23 jusqu'à la cathode secondaire 25, les protons pouvant se présenter sous la forme des ions H₃O⁺. Elle peut être identique ou différente, en composition, par rapport à la membrane primaire 14. De préférence, elle présente toutefois une épaisseur moyenne supérieure à celle de la membrane primaire 14, limitant ainsi la quantité d'hydrogène ayant diffusé par perméation de la cathode secondaire 25 jusqu'à l'anode secondaire 23. Elle peut être réalisée à partir de matériaux choisis habituellement par l'homme du métier, tels que ceux commercialisés sous la référence Nafion 115 ou Nafion 117 qui présente un coefficient de perméation à l'hydrogène de l'ordre de 1,25.10⁴ cm³/s/cm² à 80°C et à pression atmosphérique. La membrane secondaire 24 peut alors présenter une épaisseur moyenne, à force de serrage nulle, supérieure à 100µm, par exemple égale à 150µm ou à 180µm environ.

La source électrique 27, par exemple ici une source de courant, est destinée à être connectée électriquement aux électrodes 23, 25 de la cellule électrochimique secondaire 21 lors du mode EC. Elle est adaptée à générer une différence de potentiel électrique continue V2 entre l'anode secondaire 23 et la cathode secondaire 25. La tension électrique générée V2 est positive, comme la tension V1, dans le sens où le potentiel électrique à l'anode secondaire 23 est supérieur à celui de la cathode secondaire 25. Elle présente une intensité inférieure à celle de la tension V1, par exemple dix fois inférieure, et peut être égale à 0,2V environ. La tension électrique V2 permet ainsi l'oxydation de l'hydrogène (HOR) à l'anode secondaire 23, la circulation des électrons dans le circuit électrique, et la réduction des protons (HER) à la cathode secondaire 25. La source électrique 27 peut alternativement être une source de tension.

Une charge électrique 4, qui peut être la charge électrique alors connectée à la cellule primaire, ou une charge électrique distincte, est destinée à être connectée électriquement à la cellule électrochimique secondaire lors du mode FC. Elle est adaptée à recevoir le courant électrique généré à l'anode secondaire 23 par la réaction d'oxydation de l'hydrogène (HOR). Ainsi, une différence de potentiel électrique est appliquée aux bornes de la charge électrique, où le potentiel appliqué par la cathode secondaire 25 est supérieur à celui appliqué par l'anode secondaire 23. La tension appliquée par la cellule électrochimique secondaire 21 peut être de l'ordre de 0,7V. Le signe de cette tension électrique est opposé à celui des tensions électriques V1 et V2.

La cellule secondaire 21 comporte des circuits anodique 22 et cathodique 26 de distribution fluidique, qui assurent l'écoulement de fluide le long et au contact des anode 23 et cathode 25 secondaires, respectivement. Ainsi, le circuit de distribution anodique 22 assure l'écoulement fluidique entre un premier collecteur anodique 22.1 et un deuxième collecteur anodique 22.2 opposé au premier. Le premier collecteur anodique 22.1 est relié au circuit de distribution anodique 12 du dispositif primaire 10, et le deuxième collecteur anodique 22.2 est relié au deuxième port anodique 3a. De même, le circuit de distribution cathodique 26 assure l'écoulement fluidique entre un premier collecteur cathodique 26.1 et un deuxième collecteur cathodique 26.2 opposé au premier. Le premier collecteur cathodique 26.1 est relié au circuit de distribution cathodique 16 du dispositif primaire 10, et le deuxième collecteur cathodique 26.2 est relié au deuxième port cathodique 3c.

Ainsi, les dispositifs primaire 10 et secondaire 20 du système électrochimique réversible 1 sont en configuration dite d'électrodes d'oxydation et de réduction. En effet, en mode EC comme en mode FC, les anodes primaire 13 et secondaire 23 sont le lieu de réactions d'oxydation, et les cathodes primaire 15 et secondaire 25 sont le lieu de réactions de réduction. Cela implique que, en fonctionnement, les gaz produits aux deuxièmes ports 3a, 3c sont inversés entre le mode EC et le mode FC. Plus précisément, le deuxième port anodique 3a fournit principalement de l'oxygène en mode EC mais reçoit de l'hydrogène en mode FC, et le deuxième port cathodique 3c fournit principalement de l'hydrogène en mode EC mais reçoit de l'oxygène en mode FC.

Le système électrochimique réversible 1 peut être relié, par les deuxièmes ports 3a, 3c, à un dispositif de stockage (non représenté) de l'hydrogène et de l'oxygène générés lors du fonctionnement en mode EC. Il peut également être relié à un dispositif intermédiaire de gestion des fluides (non représenté), adapté à relier le deuxième port anodique 3a au stockage d'oxygène lors du mode EC ou au stockage d'hydrogène lors du mode FC, et à relier le deuxième port cathodique 3c au stockage d'hydrogène lors du mode EC ou au stockage d'oxygène lors du mode FC. Un dispositif de purge peut également être prévu pour assécher les AME primaire et secondaire entre les phases EC et FC, par exemple en faisant circuler de l'air ou de l'azote. L'azote peut avoir été obtenu par le système réversible 1 fonctionnant en mode FC en boucle fermée, et plus précisément en boucle cathodique fermée. Ainsi l'air reçu au premier port cathodique 2c est réinjecté au deuxième port cathodique 3c, et le système réversible 1 consomme progressivement l'oxygène jusqu'à ce que le gaz ne comporte essentiellement que de l'azote.

Par ailleurs, selon un mode de réalisation, le dispositif primaire 10 comporte une membrane primaire 14 amincie, c'est-à-dire que son épaisseur moyenne est inférieure ou égale à 100µm, et de préférence inférieure à celle de la membrane électrolytique 24 du dispositif secondaire 20. Ainsi, la diminution de l'épaisseur moyenne de la membrane primaire 14 conduit à une augmentation des performances du système réversible 1, dans la mesure où la résistance ohmique protonique est diminuée. En effet, la diminution de l'épaisseur moyenne de la membrane primaire 14 permet de diminuer la différence de potentiel V1 appliquée aux anode 13 et cathode 15 primaires en mode EC, pour une même densité de courant électrique. Ainsi, la puissance électrique nécessaire à l'électrolyse de l'eau est diminuée, ce qui permet d'obtenir un meilleur rendement global du système réversible 1 en mode EC, le rendement global étant ici défini comme le rapport entre le pouvoir calorifique supérieur du gaz produit sur la puissance électrique consommée. En variante, pour une épaisseur moyenne diminuée de la membrane primaire 14 et à tension électrique V1 inchangée, la densité de courant électrique peut être largement augmentée, et ainsi la production d'hydrogène augmentée en conséquence.

Cependant, cette diminution de l'épaisseur moyenne de la membrane primaire 14 peut conduire à ce que, en mode EC, de l'hydrogène généré à la cathode primaire 15 diffuse jusqu'à l'anode primaire 13 par perméation, et ainsi se mélanger à l'oxygène généré. Le dispositif secondaire 20 assure alors la séparation de l'hydrogène contenu dans l'oxygène, permettant ainsi de limiter la fraction volumique d'hydrogène dans l'oxygène, et donc limiter les risques d'ignition dans les circuits anodiques.

Le dispositif secondaire 20 peut être dimensionné, notamment en termes de surface active de la membrane secondaire 24, pour que, en mode EC, la proportion d'hydrogène dans l'oxygène au niveau du deuxième port anodique 3a soit sensiblement inférieure ou égale à une valeur prédéfinie. La surface active est définie comme étant la surface de la membrane électrolytique située entre et au contact d'une anode et d'une cathode.

A ce titre, un procédé de réalisation du système électrochimique réversible 1 peut comporter une étape de calcul de la surface active du dispositif secondaire 20 de telle manière que la proportion d'hydrogène dans l'oxygène à la sortie de l'anode secondaire 23 présente une valeur dite de sortie inférieure ou égale à une valeur prédéfinie, compte tenu d'une valeur dite d'entrée de la proportion volumique d'hydrogène à l'entrée 22.1 de l'anode secondaire 23 et de la valeur de la tension électrique V2 appliquée lors du mode EC.

En effet, l'épaisseur de la membrane électrolytique primaire 14 du dispositif primaire 10 peut être dimensionnée en fonction de la valeur acceptée par l'utilisateur de la proportion volumique d'hydrogène dans l'oxygène à la sortie anodique primaire 12.2. Plus précisément, la proportion d'hydrogène peut s'écrire comme le rapport d_{H2}/d_{O2} entre un débit molaire d_{H2} d'hydrogène ayant migré par perméation au travers de la membrane primaire 14 sur un débit molaire d_{O2} d'oxygène produit à l'anode primaire 13. Ce rapport d_{H2}/d_{O2} est inversement proportionnel à la valeur de l'épaisseur moyenne de la membrane primaire 14. En effet, le débit molaire d_{H2} d'hydrogène reçu à l'anode primaire 13 est proportionnel au rapport de la surface active Sₘ de la membrane primaire 14 sur l'épaisseur moyenne eₘ de la membrane primaire 14, autrement dit : d_{H2} ∝ Sₘ/eₘ. De plus, le débit molaire d_{O2} produit à l'anode primaire 13 par oxydation de l'eau lors du mode EC est proportionnel au courant électrique I du dispositif primaire 10 : d_{O2} ∝ I. Ainsi, le rapport d_{H2}/d_{O2} est proportionnel à Sₘ/(eₘ.I). Aussi, il est possible de déterminer l'épaisseur de la membrane primaire 14 en fonction d'une tolérance donnée de perméation d'hydrogène au travers de la membrane primaire 14, et donc en fonction d'une valeur acceptée de la proportion volumique d'hydrogène dans l'oxygène à la sortie anodique primaire 12.2.

Comme mentionné précédemment, le dimensionnement du dispositif secondaire 20, et notamment de la surface active de la membrane électrolytique secondaire 24, permet de réduire, lors du mode EC, la proportion volumique V_{H2} d'hydrogène dans l'oxygène pour qu'elle passe d'une valeur haute V_{H2,e} à l'entrée anodique secondaire 22.1 à une valeur basse V_{H2,s} à la sortie anodique secondaire 22.2. En effet, la différence entre la valeur haute d'entrée V_{H2,e} et la valeur basse de sortie V_{H2,s} de la proportion d'hydrogène V_{H2} dans le dispositif secondaire 20 correspond au débit molaire d'hydrogène d_{H2,20} ayant été oxydé à l'anode secondaire 23, qui est proportionnel au courant électrique I₂₀ du dispositif secondaire 20 : d_{H2,20} ∝ I₂₀. Ainsi, pour une tension électrique donnée V2 et un courant électrique I₂₀ permettant d'obtenir le débit molaire d'hydrogène d_{H2,20} voulu, la courbe de polarisation V2=f(i₂₀) du dispositif secondaire 20 en mode EC permet de déduire la valeur de la densité de courant i₂₀ nécessaire, et donc la valeur minimale de la surface active Sm₂₄ de la membrane secondaire 24. La valeur basse de sortie V_{H2,s} peut donc être inférieure ou égale à une valeur seuil prédéterminée.

Par ailleurs, en mode FC, le dispositif secondaire 20 fonctionne comme une pile à combustible supplémentaire, permettant de répondre à un besoin de puissance électrique de la part de la charge électrique.

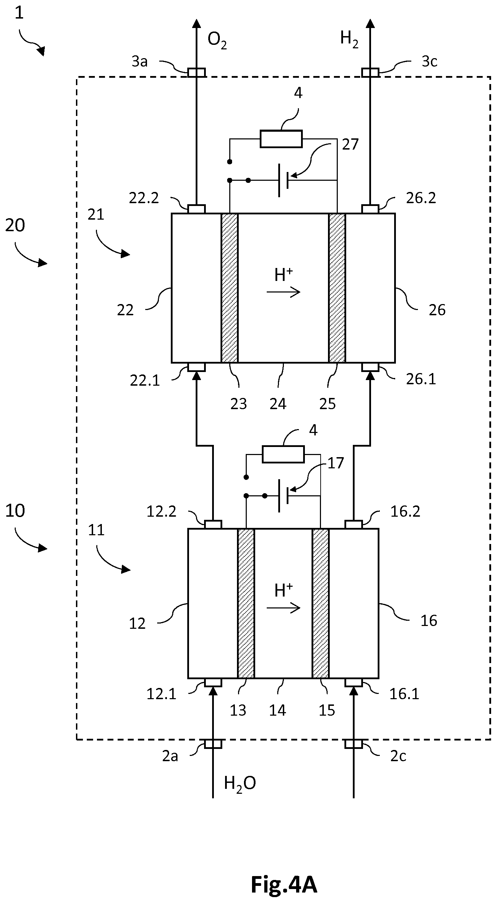

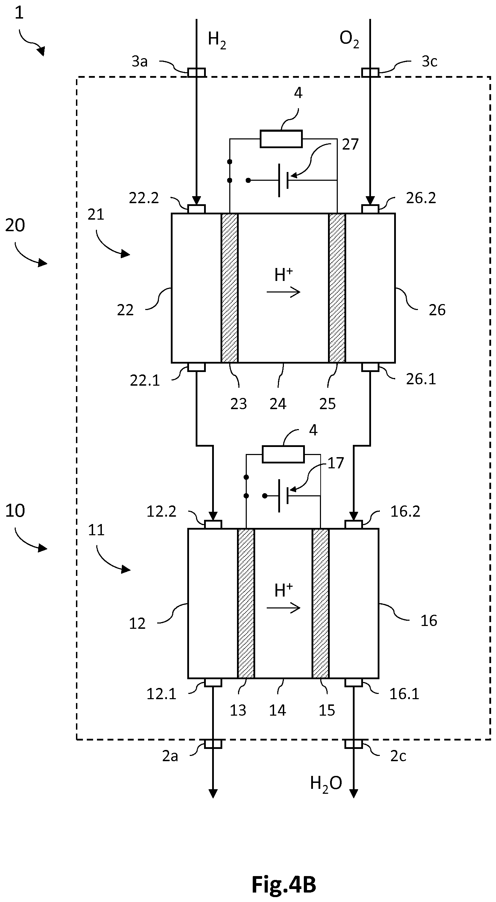

Le fonctionnement du système électrochimique réversible 1 selon le mode de réalisation illustré sur la figure 3 est maintenant illustré en référence aux figures 4A et 4B.

La figure 4A illustre une phase dans lequel le système électrochimique fonctionne en mode EC, c'est-à-dire qu'il réalise l'électrolyse de l'eau introduite au premier port anodique 2a, générant ainsi de l'oxygène et de l'hydrogène aux deuxièmes ports 3a, 3c.

De l'eau est ainsi fournie au premier port anodique 2a du système réversible 1, qui est transmise au circuit de distribution anodique 12 du dispositif primaire 10, et donc à l'anode primaire 13. La pression anodique peut être égale à 1 bar environ. L'eau liquide injectée peut être en sur-stoechiométrie vis-à-vis du dispositif primaire 10, par exemple d'un rapport 10, de sorte que la quantité d'eau injectée au premier port anodique 2a est supérieure à la quantité d'eau consommée à l'anode primaire 13, et de préférence suffisante pour évacuer la chaleur produite. De préférence, de l'eau est également introduite au premier port cathodique 2c, de manière à assurer une humidification correcte de la membrane primaire 14. La pression cathodique au premier port cathodique 2c peut être de l'ordre de plusieurs dizaines de bars, par exemple est égale à 30 bars environ.

Du fait de l'application par la source électrique de la tension V1 aux anode 13 et cathode 15 primaires, et par la présence d'un catalyseur adapté à l'anode primaire 13 (ici de l'oxyde d'iridium), le dispositif primaire 10 réalise l'oxydation de l'eau (OER) à l'anode primaire 13 et la réduction de protons (HER) à la cathode primaire 15. L'eau est ainsi oxydée, ce qui génère de l'oxygène, des électrons et des protons, ces derniers diffusant au travers de la membrane primaire 14 jusqu'à la cathode primaire 15. La cathode primaire 15 réalise la réduction des protons reçus, par la tension électrique V1 appliquée et la présence d'un catalyseur cathodique adapté (ici des particules de platine), générant ainsi de l'hydrogène.

Dans cet exemple, la membrane primaire 14 est avantageusement amincie, et présente alors une épaisseur moyenne inférieure ou égale à 100µm. De l'hydrogène formé à la cathode primaire 15 peut alors diffuser par perméation au travers de la membrane primaire 14 et rejoint le circuit anodique 12. Ainsi, en sortie 12.2 de l'anode primaire 13 se trouve un mélange d'oxygène et d'hydrogène. La proportion volumique d'hydrogène dans l'oxygène peut être supérieure à 4%, par exemple être égale à 10% voire à 20% environ, sans qu'il y ait un risque de sécurité lorsque de l'eau liquide est également présente du fait de la sur-stoechiométrie. Ala sortie 16.2 de la cathode primaire 15, se trouve de l'hydrogène formé à la cathode, et éventuellement de l'eau liquide. Les fluides issus de l'anode 13 et de la cathode 15 du dispositif primaire 10 sont transmis à l'anode 23 et à la cathode 25, respectivement, du dispositif secondaire 20.

Du fait de l'application d'une tension électrique V2 entre l'anode secondaire 23 et la cathode secondaire 25, et par la présence d'un catalyseur anodique adapté (ici des particules de platine), le dispositif secondaire 20 réalise à l'anode 23 l'oxydation de l'hydrogène présent (HOR), sans que l'oxygène et l'eau liquide ne soient oxydés par le catalyseur utilisé du fait notamment de la faible valeur de tension électrique, et la réduction de protons (HER) à la cathode 25. Les protons diffusent au travers de la membrane secondaire 24 de l'anode 23 à la cathode 25, où ils sont réduits, générant ainsi de l'hydrogène. Ainsi, la proportion volumique d'hydrogène dans l'oxygène à la sortie 22.2 de l'anode secondaire 23 est alors inférieure à la valeur à la sortie 12.2 de l'anode primaire 13, et est inférieure ou égale à une valeur prédéfinie, par exemple 4%, voire 2% ou moins. De préférence, la surface active du dispositif secondaire 20 est adaptée de sorte que sensiblement tout l'hydrogène initialement présent soit oxydé.

Ainsi, le système électrochimique réversible 1 fournit en mode EC essentiellement de l'oxygène au niveau du deuxième port anodique 3a, et le cas échéant de l'eau liquide, avec une proportion volumique d'hydrogène réduite dans la mesure où l'hydrogène ayant diffusé a été au moins en partie oxydé à l'anode secondaire 23. Le système réversible 1 fournit au deuxième port cathodique 3c de l'hydrogène et le cas échéant de l'eau liquide. Des séparateurs de phase (non représentés) peuvent être présents pour collecter l'eau liquide et laisser s'écouler les gaz. L'hydrogène et l'oxygène générés par électrolyse de l'eau peuvent, l'un et/ ou l'autre, être stockés par le dispositif de stockage (non représenté).

Ainsi, le système électrochimique réversible 1 peut assurer l'électrolyse de l'eau avec des performances électrochimiques améliorées du fait de la faible épaisseur de la membrane primaire 14. La proportion volumique d'hydrogène dans l'oxygène, du fait de la perméation de l'hydrogène au travers de la membrane primaire 14, est diminuée partiellement ou totalement par le dispositif secondaire 20, limitant ainsi les risques d'ignition. De plus, le dispositif secondaire 20 ne requiert que très peu d'énergie électrique, par exemple moins de 1% de la consommation électrique totale, de sorte qu'il impacte peu la consommation électrique globale du système réversible 1.

A la suite d'une phase en mode EC et avant une phase en mode FC, le fonctionnement du système électrochimique réversible 1 prévoit une phase intermédiaire dans laquelle une purge est effectuée pour réduire ou supprimer la quantité d'eau liquide présente dans les différents éléments des dispositifs primaire 10 et secondaire 20. La purge peut être assurée en faisant circuler de l'air ou de l'azote, dans les circuits anodique et cathodique des deux dispositifs 10, 20. L'azote injecté peut avoir été généré par le système réversible 1, lors d'une étape intermédiaire, en faisant circuler en boucle fermée de l'air entre le deuxième port cathodique 3c et le premier port cathodique 2c, en mode FC. Ainsi, l'oxygène est consommé et l'azote est conservé pour l'étape de purge.

La figure 4B illustre une phase du fonctionnement du système électrochimique réversible 1 correspondant au mode FC, c'est-à-dire que le système réversible 1 fonctionne comme une pile à combustible générant de l'eau et de l'énergie électrique à partir d'oxygène et d'hydrogène fournis aux deuxièmes ports 3a, 3c.

De l'hydrogène est fourni au deuxième port anodique 3a, et de l'oxygène, par exemple contenu dans l'air, est fourni au deuxième port cathodique 3c. Ces gaz peuvent être fournis à partir du dispositif de stockage (non représenté). L'hydrogène et l'oxygène fournis sont en sur-stoechiométrie vis-à-vis du dispositif secondaire 20, de sorte que la quantité d'hydrogène injecté est supérieure à la quantité d'hydrogène oxydé à l'anode secondaire 23, et la quantité d'oxygène injecté est supérieure à la quantité d'oxygène réduit à la cathode secondaire 25. De plus, les électrodes secondaires 23, 25 et primaires 13, 15 sont déconnectées des sources de courant 17, 27, et connectées électriquement à au moins une charge électrique 4, par exemple à une même charge électrique 4.

Le dispositif secondaire 20 reçoit l'hydrogène à l'anode secondaire 23 et l'oxygène à la cathode secondaire 25. Par la présence d'un catalyseur anodique adapté (ici les particules de platine), l'anode secondaire 23 réalise l'oxydation de l'hydrogène (HOR). Les protons générés diffusent alors au travers de la membrane secondaire 24 jusqu'à la cathode 25. De plus, celle-ci réalise la réduction de l'oxygène (ORR) introduit, du fait de la présence du catalyseur cathodique adapté (ici les particules de platine). Ainsi, le dispositif secondaire 20 produit de l'eau à la cathode 25, et produit de l'énergie électrique qui alimente alors la charge électrique 4 lorsque cette dernière est connectée au dispositif secondaire 20.

Le dispositif primaire 10 reçoit ensuite, provenant du dispositif secondaire 20, de l'hydrogène à l'anode 13, ainsi que de l'oxygène et de l'eau à la cathode 15. Par la présence d'un catalyseur anodique adapté (ici les particules de platine), l'anode primaire 13 réalise l'oxydation de l'hydrogène (HOR). Les protons générés diffusent alors au travers de la membrane primaire 14 jusqu'à la cathode 15. De plus, celle-ci réalise la réduction de l'oxygène (ORR) introduit, du fait de la présence du catalyseur cathodique adapté (ici les particules de platine). Ainsi, le dispositif primaire 10 produit également de l'eau à la cathode 15, ainsi que de l'énergie électrique alimentant la charge électrique 4.

Le premier port anodique 2a peut ainsi recevoir de l'hydrogène n'ayant pas réagi, et le deuxième port cathodique 3c reçoit l'eau générée et l'air n'ayant pas réagi.

Ainsi, le système électrochimique réversible 1 présente, également en mode FC, des performances électrochimiques améliorées du fait de la faible épaisseur de la membrane primaire 14. La charge électrique 4 est ainsi principalement alimentée par le dispositif primaire 10, mais peut également l'être par le dispositif secondaire 20 qui correspond alors à une pile à combustible secondaire. Le système électrochimique réversible 1 est alors en mesure de répondre à un besoin accru de puissance électrique du fait de la présence de la pile secondaire 20.

Ala suite d'une phase en mode FC, et avant la phase suivante en mode EC, une purge peut être effectuée dans le système électrochimique réversible 1 pour supprimer l'eau liquide tout en humidifiant suffisamment les membranes primaire 14 et secondaire 24.

Le procédé de fonctionnement du système électrochimique réversible 1 peut alors comporter une succession de phases EC et de phases FC, avantageusement séparées par une phase de purge permettant de réduire voire supprimer la quantité d'eau liquide présente. Cependant, les phases en mode EC permettent de ré-humidifier la membrane primaire 14, mais également la membrane secondaire 24, à la suite des phases en mode FC, ce qui permet d'éviter un assèchement important des membranes 14, 24. On limite ainsi les risques de vieillissement prématuré des membranes électrolytiques 14, 24. Par ailleurs, le rendement global (défini en électrolyse comme pouvoir calorifique supérieur du gaz produit sur la puissance électrique consommée et à l'inverse en mode pile à combustible) du système réversible 1 peut présenter un gain de l'ordre de 10 à 15% en mode EC et de l'ordre de 15 à 25% en mode FC pour une densité de courant de 1A/cm² environ et une épaisseur de la membrane 14 allant de 50µm à 90µm environ.

Des modes de réalisation particuliers viennent d'être décrits. Différentes variantes et modifications apparaîtront à l'homme du métier.

## Revendications

1. Système électrochimique réversible (1), ayant des premiers ports anodique (2a) et cathodique (2c) et des deuxièmes ports anodique (3a) et cathodique (3c) opposés, destiné à fonctionner alternativement :
- en mode électrolyseur (EC) dans lequel il est adapté à recevoir de l'eau à électrolyser au premier port anodique (2a) et à fournir de l'oxygène au deuxième port anodique (3a) et de l'hydrogène au deuxième port cathodique (3c), et
- en mode pile à combustible (FC), dans lequel il est adapté à recevoir de l'hydrogène au deuxième port anodique (3a) et de l'oxygène au deuxième port cathodique (3c) et à fournir de l'eau au premier port cathodique (2c) ;
comportant un dispositif électrochimique primaire (10) comprenant un assemblage membrane électrodes, comportant une anode primaire (13) et une cathode primaire (15) séparée par une membrane primaire (14) échangeuse de protons,
∘ l'anode primaire (13), reliée au premier port anodique (2a) et au deuxième port anodique (3a), étant adaptée à réaliser une oxydation de l'eau (OER) provenant du premier port anodique (2a) et une oxydation de l'hydrogène (HOR) provenant du deuxième port anodique (3a) ;
∘ la cathode primaire (15), reliée au premier port cathodique (2c) et au deuxième port cathodique (3c), étant adaptée à réaliser une rédaction de protons (HER), et une réduction d'oxygène (ORR) provenant du deuxième port cathodique (3c) ;
**caractérisé en ce qu'**il comporte un dispositif électrochimique secondaire (20) comprenant un assemblage membrane électrodes, comportant une anode secondaire (23) et une cathode secondaire (25) séparée par une membrane secondaire (24) échangeuse de protons,
∘ l'anode secondaire (23) étant reliée à l'anode primaire (13) et au deuxième port anodique (3a), et étant adaptée à réaliser une oxydation d'hydrogène (HOR) provenant de l'anode primaire (13) et une oxydation de l'hydrogène (HOR) provenant du deuxième port anodique (3a) ;
∘ la cathode secondaire (25) étant reliée à la cathode primaire (15) et au deuxième port cathodique (3c), et étant adaptée à réaliser une rédaction de protons (HER) et une réduction de l'oxygène (ORR) provenant du deuxième port cathodique (3c).

2. Système électrochimique réversible (1) selon la revendication 1, dans lequel la membrane électrolytique primaire (14) présente une épaisseur moyenne inférieure ou égale à 100µm.

3. Système électrochimique réversible (1) selon la revendication 1 ou 2, dans lequel la membrane électrolytique primaire (14) présente une épaisseur moyenne inférieure à celle de la membrane électrolytique secondaire (24).

4. Système électrochimique réversible (1) selon l'une quelconque des revendications 1 à 3, dans lequel la membrane électrolytique secondaire (24) présente une épaisseur moyenne supérieure à 100µm.

5. Système électrochimique réversible (1) selon l'une quelconque des revendications 1 à 4, comportant une source électrique (17) dite primaire adaptée à appliquer en mode électrolyseur un premier signal électrique (V1) entre les anode (13) et cathode (15) primaires, et une source électrique (27) dite secondaire adaptée à appliquer en mode électrolyseur un deuxième signal électrique (V2) entre les anode (23) et cathode (25) secondaires, le deuxième signal électrique (V2) étant de même signe que le premier signal électrique (V1) et d'une intensité inférieure.

6. Système électrochimique réversible (1) selon l'une quelconque des revendications 1 à 5, comportant au moins un circuit anodique (12, 22) de circulation fluidique reliant le premier port anodique (2a) au deuxième port anodique (3a) en passant par les anodes primaire (13) secondaire (23), et au moins un circuit cathodique (16, 26) de circulation fluidique reliant le premier port cathodique (2c) au deuxième port cathodique (3c) en passant par les cathodiques primaire (15) et secondaire (25).

7. Procédé de fonctionnement du système électrochimique réversible (1) selon l'une quelconque des revendications précédentes, comportant une alternance entre :
∘ au moins une étape en mode électrolyseur dans lequel de l'eau est introduite au premier port anodique (2a) en sur-stoechiométrie vis-à-vis du dispositif primaire (10) ;
∘ au moins une étape en mode pile à combustible dans lequel de l'hydrogène et de l'oxygène sont introduits respectivement aux deuxièmes ports anodique (3a) et cathodique (3c) en sur-stoechiométrie au moins vis-à-vis du dispositif secondaire (20).

8. Procédé selon la revendication 7, comportant, entre une étape en mode électrolyseur et une étape en mode pile à combustible, une étape intermédiaire de purge de l'eau liquide présente dans le système électrochimique réversible (1) par injection d'azote.

9. Procédé selon la revendication 8, comportant une étape d'obtention d'azote par injection d'air au deuxième port cathodique (3c), le système électrochimique réversible (1) fonctionnant en mode pile à combustible en boucle fermée.

## Patentansprüche

1. Reversibles elektrochemisches System (1), das erste anodische (2a) und kathodische (2c) Anschlüsse und gegenüberliegende zweite anodische (3a) und kathodische (3c) Anschlüsse aufweist, dazu bestimmt, abwechselnd zu funktionieren:
- im Elektrolysemodus (EC), in dem es dazu vorgesehen ist, zu elektrolysierendes Wasser am ersten anodischen Anschluss (2a) zu erhalten und Sauerstoff an den zweiten anodischen Anschluss (3a) und Wasserstoff an den zweiten kathodischen Anschluss (3c) zu liefern, und
- im Brennstoffzellenmodus (FC), in dem es dazu vorgesehen ist, Wasserstoff am zweiten anodischen Anschluss (3a) und Sauerstoff am zweiten kathodischen Anschluss (3c) zu erhalten und Wasser an den ersten kathodischen Anschluss (2c) zu liefern;
umfassend eine primäre elektrochemische Vorrichtung (10), umfassend eine Membran-Elektroden-Einheit, umfassend eine primäre Anode (13) und eine primäre Kathode (15), die durch eine primäre Protonenaustauschmembran (14) getrennt sind,
∘ wobei die primäre Anode (13), die mit dem ersten anodischen Anschluss (2a) und dem zweiten anodischen Anschluss (3a) verbunden ist, dazu vorgesehen ist, eine Oxidation des Wassers (OER), das vom ersten anodischen Anschluss (2a) kommt, und eine Oxidation des Waserstoffs (HOR), der vom zweiten anodischen Anschluss (3a) kommt, durchzuführen;
∘ wobei die primäre Kathode (15), die mit dem ersten kathodischen Anschluss (2c) und dem zweiten kathodischen Anschluss (3c) verbunden ist, dazu vorgesehen ist, eine Protonenredaktion (HER) und eine Sauerstoffreduktion (ORR), stammend vom zweiten kathodischen Anschluss (3c), durchzuführen;
**dadurch gekennzeichnet, dass** es eine sekundäre elektrochemische Vorrichtung (20) umfasst, umfassend eine Membran-Elektroden-Einheit, umfassend eine sekundäre Anode (23) und eine sekundäre Kathode (25), die durch eine sekundäre Protonenaustauschmembran (24) getrennt sind,
∘ wobei die sekundäre Anode (23) mit der primären Anode (13) und dem zweiten anodischen Anschluss (3a) verbunden und dazu vorgesehen ist, eine Oxidation des Wasserstoffs (HOR), der von der primären Anode (13) kommt, und eine Oxidation des Wasserstoffs (HOR), der von dem zweiten anodischen Anschluss (3a) kommt, durchzuführen;
∘ wobei die sekundäre Kathode (25) mit der primären Kathode (15) und dem zweiten kathodischen Anschluss (3c) verbunden und dazu vorgesehen ist, eine Protonenredaktion (HER) und eine Sauerstoffreduktion (ORR), stammend vom zweiten kathodischen Anschluss (3c), durchzuführen.

2. Reversibles elektrochemisches System (1) nach Anspruch 1, bei dem die primäre elektrolytische Membran (14) eine durchschnittliche Dicke kleiner oder gleich 100 µm aufweist.

3. Reversibles elektrochemisches System (1) nach Anspruch 1 oder 2, bei dem die primäre elektrolytische Membran (14) eine kleinere durchschnittliche Dicke als jene der sekundären elektrolytischen Membran (24) aufweist.

4. Reversibles elektrochemisches System (1) nach einem der Ansprüche 1 bis 3, bei dem die sekundäre elektrolytische Membran (24) eine durchschnittliche Dicke über 100 µm aufweist.

5. Reversibles elektrochemisches System (1) nach einem der Ansprüche 1 bis 4, umfassend eine so genannte primäre Stromquelle (17), die dazu vorgesehen ist, im Elektrolysemodus ein erstes elektrisches Signal (V1) zwischen der primären Anode (13) und Kathode (15) anzulegen, und eine so genannte sekundäre Stromquelle (27), die dazu vorgesehen ist, im Elektrolysemodus ein zweites elektrisches Signal (V2) zwischen der sekundären Anode (23) und Kathode (25) anzulegen, wobei das zweite elektrische Signal (V2) dasselbe Vorzeichen wie das erste elektrische Signal (V1) hat und von einer geringeren Stärke ist.

6. Reversibles elektrochemisches System (1) nach einem der Ansprüche 1 bis 5, umfassend mindestens eine anodische Fluidzirkulationsschaltung (12, 22), die den ersten anodischen Anschluss (2a) mit dem zweiten anodischen Anschluss (3a) verbindet, wobei sie über die primäre (13) und sekundäre (23) Anode verläuft, und mindestens eine kathodische Fluidzirkulationsschaltung (16, 26), die den ersten kathodischen Anschluss (2c) mit dem zweiten kathodischen Anschluss (3c) verbindet, wobei sie über die primären (15) und sekundären (25) Kathoden verläuft.

7. Betriebsverfahren des reversiblen elektrochemischen Systems (1) nach einem der vorhergehenden Ansprüche, umfassend eine Wechselfolge zwischen:
∘ mindestens einem Schritt im Elektrolysemodus, in dem Wasser am ersten anodischen Anschluss (2a) über-stöchiometrisch gegenüber der primären Vorrichtung (10) eingeleitet wird;
∘ mindestens einem Schritt im Brennstoffzellenmodus, in dem Wasserstoff und Sauerstoff an den zweien anodischen (3a) bzw. kathodischen (3c) Anschlüssen über-stöchiometrisch zumindest gegenüber der sekundären Vorrichtung (20) eingeleitet werden.

8. Verfahren nach Anspruch 7, umfassend, zwischen einem Schritt im Elektrolysemodus und einem Schritt im Brennstoffzellenmodus, einen Zwischenschritt des Entfernens des flüssigen Wassers, das in dem reversiblen elektrochemischen System (1) vorhanden ist, durch Einspritzen von Stickstoff.

9. Verfahren nach Anspruch 8, umfassend einen Schritt des Erhaltens von Stickstoff durch Einspritzen von Luft am zweiten kathodischen Anschluss (3c), wobei das reversible elektrochemische System (1) im Brennstoffzellenmodus in geschlossener Schleife funktioniert.

## Claims

1. Reversible electrochemical system (1), having first anode (2a) and cathode (2c) ports and opposite second anode (3a) and cathode (3c) ports, intended to operate alternately:
- in electrolysis cell (EC) mode in which it is suitable for receiving water to be electrolyzed at the first anode port (2a) and for supplying oxygen to the second anode port (3a) and hydrogen to the second cathode port (3c), and
- in fuel cell (FC) mode, in which it is suitable for receiving hydrogen at the second anode port (3a) and oxygen at the second cathode port (3c) and for supplying water to the first cathode port (2c);
comprising a primary electrochemical device (10) comprising a membrane electrode assembly, comprising a primary anode (13) and a primary cathode (15) separated by a primary proton-exchange membrane (14),
∘ the primary anode (13), connected to the first anode port (2a) and to the second anode port (3a), being suitable for carrying out an oxidation of the water (OER) originating from the first anode port (2a) and an oxidation of the hydrogen (HOR) originating from the second anode port (3a);
∘ the primary cathode (15), connected to the first cathode port (2c) and to the second cathode port (3c), being suitable for carrying out a reduction of protons (HER), and a reduction of oxygen (ORR) originating from the second cathode port (3c);
**characterized in that** it comprises a secondary electrochemical device (20) comprising a membrane electrode assembly, comprising a secondary anode (23) and a secondary cathode (25) separated by a secondary proton-exchange membrane (24),
∘ the secondary anode (23) being connected to the primary anode (13) and to the second anode port (3a), and being suitable for carrying out an oxidation of hydrogen (HOR) originating from the primary anode (13) and an oxidation of hydrogen (HOR) originating from the second anode port (3a);
∘ the secondary cathode (25) being connected to the primary cathode (15) and to the second cathode port (3c), and being suitable for carrying out a reduction of protons (HER) and a reduction of oxygen (ORR) originating from the second cathode port (3c).

2. Reversible electrochemical system (1) according to Claim 1, in which the primary electrolytic membrane (14) has a mean thickness less than or equal to 100 µm.

3. Reversible electrochemical system (1) according to Claim 1 or 2, in which the primary electrolytic membrane (14) has a mean thickness less than that of the secondary electrolytic membrane (24).

4. Reversible electrochemical system (1) according to any one of Claims 1 to 3, in which the secondary electrolytic membrane (24) has a mean thickness greater than 100 µm.

5. Reversible electrochemical system (1) according to any one of Claims 1 to 4, comprising a so-called primary electrical source (17) suitable for applying, in electrolysis cell mode, a first electrical signal (V1) between the primary anode (13) and primary cathode (15), and a so-called secondary electrical source (27) suitable for applying, in electrolysis cell mode, a second electrical signal (V2) between the secondary anode (23) and secondary cathode (25), the second electrical signal (V2) being of the same sign as the first electrical signal (V1) and of a lower intensity.

6. Reversible electrochemical system (1) according to any one of Claims 1 to 5, comprising at least one anode circuit (12, 22) for fluid circulation connecting the first anode port (2a) to the second anode port (3a) passing through the primary (13) and secondary (23) anodes, and at least one cathode circuit (16, 26) for fluid circulation connecting the first cathode port (2c) to the second cathode port (3c) passing through the primary (15) and secondary (25) cathodes.

7. Process for operating the reversible electrochemical system (1) according to any one of the preceding claims, comprising an alternation between:
∘ at least one step in electrolysis cell mode in which water is introduced at the first anode port (2a) in superstoichiometry with respect to the primary device (10);
∘ at least one step in fuel cell mode in which hydrogen and oxygen are introduced respectively at the second anode (3a) and cathode (3c) ports in superstoichiometry at least with respect to the secondary device (20).

8. Process according to Claim 7, comprising, between a step in electrolysis cell mode and a step in fuel cell mode, an intermediate step for purging the liquid water present in the reversible electrochemical system (1) by injection of nitrogen.

9. Process according to Claim 8, comprising a step of obtaining nitrogen by injecting air at the second cathode port (3c), the reversible electrochemical system (1) operating in closed-loop fuel cell mode.
